# EUROPÄISCHE PATENTSCHRIFT

(11) **EP 3 483 491 B1**
(45) Veröffentlichungstag und Bekanntmachung des Hinweises auf die Patenterteilung: **08.04.2020**
(21) Anmeldenummer: 18203121.1
(22) Anmeldetag: 29.10.2018
(51) Int. Cl.: F16K 31/122, F16K 31/56, F15B 15/26

(54) **FEDERUNTERSTÜTZTER, VERRIEGELBARER LINEARANTRIEB UND EIN DAMIT AUSGESTATTETES VENTIL**
SPRING ENERGIZED, LOCKABLE LINEAR DRIVE AND A VALVE FITTED WITH SAID VALVE
ENTRAÎNEMENT LINÉAIRE VERROUILLABLE MONTÉ SUR RESSORT ET SOUPAPE AINSI ÉQUIPÉE

(30) Priorität: 09.11.2017 DE 102017126196
(43) Veröffentlichungstag der Anmeldung: 15.05.2019
(73) Patentinhaber: ArianeGroup GmbH, 82024 Taufkirchen (DE)
(72) Erfinder: Günther, Matthias, 81737 München (DE)
(74) Vertreter: Schicker, Silvia

(56) Entgegenhaltungen:
- DE-A1- 19 841 631
- DE-C1- 4 221 230
- DE-C1- 4 323 846
- DE-U1-202007 006 789
- FR-A1- 2 772 454
- US-A- 5 522 303

## Beschreibung

Die vorliegende Erfindung betrifft einen federunterstützten und verriegelbaren Linearantrieb und ein Ventil, insbesondere ein Ventil für kryogene Medien, das einen derartigen Linearantrieb umfasst.

Es sind federunterstützte Linearantriebe bekannt, wie beispielsweise aus der DE 43 23 846 C1, bei der ein betätigbarer Kolben des Linearantriebs mittels einer Verriegelungskulisse in einer ersten und einer zweiten Endlage verriegelbar ist. Hierzu ist eine Kolbenstange des Kolbens mit zwei Ausnehmungen versehen, in die zu den Ausnehmungen komplementäre Verriegelungselemente der Verriegelungskulisse einrastbar sind, um den Kolben in Bewegungsrichtung zu sperren. Die Ausnehmungen sind jeweils in Form einer rechteckigen Nut ausgebildet.

Aus der EP 0 601 794 A1 ist ferner ein verriegelbarer Linearantrieb bekannt, der ein prismenförmiges Verriegelungselement mit sich in Richtung einer zu verriegelnden Kolbenstange verjüngenden Flanken aufweist. Das Verriegelungselement ist mit einer dazu komplementären Ausnehmung in der Kolbenstange verrastbar, wodurch eine spielfreie Verrieglung gewährleistet werden soll.

DE 198 41 631 A1 offenbart einen federbelasteten Linearantrieb nach der Präambel des Anspruchs 1. US 5,522,303 offenbart einen Linearantrieb mit ersten und zweiten Verriegelungselementen nach dem kennzeichnenden Teil des Anspruchs 1.

Der Erfindung liegt die Aufgabe zugrunde, einen federunterstützten und verriegelbaren Linearantrieb bereitzustellen, der einen zuverlässigen Betrieb sicherstellt. Ferner liegt der Erfindung die Aufgabe zugrunde, ein mit einem derartigen Linearantrieb ausgestattetes Ventil bereitzustellen.

Diese Aufgaben werden mit einem federunterstützten, verriegelbaren Linearantrieb mit den Merkmalen des Anspruchs 1 und mit einem Ventil mit den Merkmalen des Anspruchs 15 gelöst.

Ein federunterstützter und verriegelbarer Linearantrieb umfasst eine Kolbeneinheit mit einem linear betätigbaren Kolben und eine den Kolben in einer Verriegelungsposition sperrenden Verriegelungseinheit. Der Linearantrieb kann in Ventilen, insbesondere in Ventilen für kryogene Medien zum Einsatz kommen. Beispielsweise kann der hier vorgeschlagene Linearantrieb einen wesentlichen Bestandteil eines Raketentreibstoffventils sein. Derartige Ventile sind von flüssigem Wasserstoff oder flüssigem Sauerstoff durchströmbar, wobei ein Öffnen und Schließen des Ventils durch Betätigen des Linearantriebs erfolgen kann.

Der Linearantrieb weist vorzugsweise ein Gehäuse auf, in dem die Kolbeneinheit und die Verriegelungseinheit aufgenommen sind. Der linear betätigbare Kolben ist vorzugsweise in dem Gehäuse translatorisch bewegbar gelagert. Beispielsweise kann die Kolbeneinheit eine in dem Gehäuse eingesetzte Gleitbuchse umfassen. Die Gleitbuchse kann den Kolben derart aufnehmen, dass dieser entlang seiner Längsachse zwischen zwei Endpositionen bewegbar ist. Eine durch die Kolbeneinheit aufgebrachte Betätigungskraft auf den Kolben bewirkt vorzugsweise, dass dieser in Richtung einer Endposition, insbesondere einer ersten Endposition verschiebbar ist.

Der Kolben der Kolbeneinheit ist bevorzugt pneumatisch und/oder hydraulisch betätigbar. Hierzu kann die Kolbeneinheit einen in dem Gehäuse des Linearantriebs ausgebildeten Zylinder umfassen, in dem eine Kolbenplatte des Kolbens aufgenommen ist, wobei die Kolbenplatte einen durch die Kolbenplatte und zumindest einen Teil des Zylinders eingegrenzten Druckraum abdichtet. Die Kolbenplatte kann mit der Kolbenstange des Kolbens verbunden sein. Zum Erzeugen der Betätigungskraft auf den Kolben, insbesondere auf die Kolbenplatte, kann der Druckraum mittels eines über eine Fluidleitung in den Druckraum zuführbaren Fluids mit Druck beaufschlagbar sein. Mit anderen Worten, eine Erhöhung des Drucks in dem Druckraum erzeugt die Betätigungskraft, die den Kolben in Richtung der ersten Endposition drückt. Demgegenüber bewirkt ein Absinken des Drucks in dem Druckraum, dass die an dem Kolben angreifende Betätigungskraft betragsmäßig abnimmt. Alternativ oder zusätzlich kann der Kolben der Kolbeneinheit elektromechanisch betätigbar sein.

Die Kolbeneinheit umfasst ferner eine entgegen der Betätigungskraft auf den Kolben wirkende, den Kolben in Richtung einer Endposition, insbesondere zweiten Endposition belastende Feder. Mit anderen Worten, eine durch die Feder erzeugte Federkraft wirkt der Betätigungskraft auf den Kolben entgegen. Eine Betätigung des Kolbens kann derart erfolgen, dass durch das Aufbringen der Betätigungskraft der Kolben in Richtung der ersten Endposition verschiebbar ist. In dem Fall, dass die auf den Kolben aufgebrachte Betätigungskraft abnimmt, sodass die Betätigungskraft betragsmäßig kleiner als die von der Feder erzeugte Federkraft ist, wird der Kolben in Richtung der zweiten Endposition, d.h. in entgegengesetzter Richtung, verschoben.

Zum Verriegeln des Linearantriebs umfasst der Kolben ein erstes Verriegelungselement, das ein Versperren des Kolbens in der Verriegelungsposition ermöglicht. Die Verriegelungseinheit des Linearantriebs umfasst ein zu dem ersten Verriegelungselement komplementäres zweites Verriegelungselement. Das zweite Verriegelungselement der Verriegelungseinheit ist zwischen einer Freigabe- und einer Sperrposition in einer Richtung quer zu der Bewegungsrichtung des Kolbens bewegbar. Das erste und das zweite Verriegelungselement sind in der Verriegelungsposition des Kolbens derart miteinander verrastbar, dass mittels Formschluss eine Bewegung des zweiten Verriegelungselements in Richtung seiner Freigabeposition gesperrt ist. Mit anderen Worten, in einem Zustand, in dem das erste und das zweite Verriegelungselement miteinander verrastet sind, ist das erste Verriegelungselement vorzugsweise in Bewegungsrichtung des zweiten Verriegelungselements von der Sperrposition zu der Freigabeposition vor dem zweiten Verriegelungselement angeordnet. Bevorzugt bewirkt in diesem Zustand eine Kraft auf das zweite Verriegelungselement in Bewegungsrichtung des zweiten Verriegelungselements von der Sperrposition zu der Freigabeposition, dass das zweite Verriegelungselement gegen das erste Verriegelungselement gedrückt wird.

Diese Ausgestaltung des Linearantriebs ermöglicht ein sicheres Sperren der Kolbeneinheit in der Verriegelungsposition. Insbesondere verhindert die formschlüssige Verbindung zwischen dem ersten und dem zweiten Verriegelungselement ein ungewolltes Lösen des Verriegelungselements, wie dies beispielsweise durch im Betrieb auftretende Vibrationen erfolgen kann. Der Linearantrieb ist somit weniger fehleranfällig und kann zuverlässig betrieben werden.

In einer Weiterentwicklung kann die Kolbeneinheit derart ausgebildet sein, dass in der Verriegelungsposition des Kolbens das erste Verriegelungselement durch die von der Feder erzeugte Federkraft in Richtung einer Verrastposition mit dem zweiten Verriegelungselement beaufschlagt ist. Mit anderen Worten, in dem Zustand, in dem das erste und das zweite Verriegelungselement miteinander verrastet sind, kann das erste Verriegelungselement mittels der von der Feder erzeugten Federkraft derart beaufschlagt sein, dass die Federkraft das erste Verriegelungselement in der Verrastposition hält. Die Federkraft kann somit auf das erste Verriegelungselement entgegen einer Richtung wirken, in die das erste Verriegelungselement zum Lösen der Verbindung mit dem zweiten Verriegelungselement bewegbar ist. Diese Ausgestaltung des Linearantriebs weist den vorteilhaften Effekt auf, dass in der Verriegelungsposition des Kolbens ein ungewolltes Lösen des ersten Verriegelungselements von dem zweiten Verriegelungselement verhindert wird, wie dies beispielsweise durch im Betrieb des Linearantriebs auftretende Vibrationen erfolgen kann.

Insbesondere kann das erste Verriegelungselement eine erste Sperrfläche umfassen, die zum Sperren der Bewegung des zweiten Verriegelungselements in Richtung seiner Freigabeposition mit einer dazu komplementären zweiten Sperrfläche des zweiten Verriegelungselements in Eingriff bringbar ist. Dies kann beispielsweise dadurch erreicht werden, dass die erste Sperrfläche und die zweite Sperrfläche relativ zu einer Bewegungsrichtung des zweiten Verriegelungselements geneigt sind. Genauer kann in dem Zustand, in dem das erste und das zweite Verriegelungselement miteinander verrastet sind, die erste Sperrfläche an der zweiten Sperrfläche anliegen.

Alternativ oder zusätzlich können die erste Sperrfläche und die zweite Sperrfläche relativ zu der Bewegungsrichtung des Kolbens geneigt sein. Bevorzugt sind die erste und die zweite Sperrfläche relativ zu der Bewegungsrichtung des Kolbens um einen Winkel zwischen 30° und 60°, vorzugsweise um 45° geneigt. Die erste Sperrfläche des ersten Verriegelungselements kann insbesondere in Richtung der von der Feder erzeugten Federkraft zeigen. Mit anderen Worten, die erste Sperrfläche kann eine Flächennormale mit einer Richtungskomponente aufweisen, die in Richtung der von der Feder erzeugten Federkraft zeigt und parallel zu dieser ist. Weiterhin kann die erste Sperrfläche des ersten Verriegelungselements einer Längsachsen, insbesondere einer Mittellängsachse der Kolbenstange, zugewandt sein. Entsprechend kann die zweite Sperrfläche des zweiten Verriegelungselements in eine Richtung entgegen der von der Feder erzeugten Federkraft zeigen. Mit anderen Worten, die zweite Sperrfläche kann eine Flächennormale mit einer Richtungskomponente aufweisen, die zwar parallel zu der Richtung der von der Feder erzeugten Federkraft sein kann, jedoch in eine entgegengesetzte Richtung zeigt. Weiterhin kann die zweite Sperrfläche des zweiten Verriegelungselements der Längsachse des Kolbens, insbesondere der Mittellängsachse der Kolbenstange, abgewandt sein.

Vorzugsweise sind die erste Sperrfläche und die zweite Sperrfläche relativ zu der Bewegungsrichtung des Kolbens und/oder relativ zu der Bewegungsrichtung des zweiten Verriegelungselements derart geneigt, dass die von der Feder erzeugte, auf das erste Verriegelungselement wirkende Federkraft über die erste Sperrfläche auf die zweite Sperrfläche übertragbar ist, sodass das zweite Verriegelungselement in Richtung seiner Sperrposition beaufschlagt wird. Durch die Ausgestaltung des ersten und zweiten Verriegelungselements kann die zwischen der ersten und der zweiten Sperrfläche übertragene, von der Feder erzeugte Federkraft in eine erste und eine dazu rechtwinklige zweite Teilkraft zerlegt werden. Die erste Teilkraft kann das erste Verriegelungselement in Richtung der Verrastposition mit dem zweiten Verriegelungselement beaufschlagen. Entsprechend kann die zweite Teilkraft das zweite Verriegelungselement in Richtung seiner Sperrposition drücken. Die so erzeugte zweite Teilkraft, die das zweite Verriegelungselement in Richtung seiner Sperrposition drückt, verhindert weiterhin ein Lösen der Sperrposition des zweiten Verriegelungselements und damit ein Lösen der Verriegelung des Kolbens. Diese Ausgestal-Ausgestaltung weist den vorteilhaften Effekt auf, dass beim Bewegen des Kolbens in seine Verriegelungsposition ein nicht korrektes Verbinden des ersten Verriegelungselements mit dem zweiten Verriegelungselement verhindert werden kann. In dem Fall, dass das zweite Verriegelungselement aufgrund einer Fehlfunktion oder Störung nicht vollständig in seine Sperrfunktion bewegt werden kann, ermöglicht die geneigte Ausgestaltung der Sperrflächen, dass das zweite Verriegelungselement aufgrund der durch die Feder erzeugte Federkraft in Richtung seiner Sperrfunktion bewegt wird. Auf diese Weise werden fehlerinduzierte Zwischenpositionen vermieden, in denen das erste und das zweite Verriegelungselement nicht korrekt oder nicht vollständig miteinander verrastet sind.

In einer Weiterentwicklung des Linearantriebs hat das erste Verriegelungselement einen keilförmigen Vorsprung, der insbesondere an der Kolbenstange des Kolbens ausgebildet sein kann. Insbesondere kann der keilförmige Vorsprung eine die erste Sperrfläche bildende erste Oberfläche und eine dazu geneigte und daran angrenzende zweite Oberfläche umfassen. Die erste und die zweite Oberfläche können in Richtung einer Spitze des keilförmigen Vorsprungs sich verjüngende Flanken des keilförmigen Vorsprungs bilden. Die zweite Oberfläche des keilförmigen Vorsprungs grenzt vorzugsweise an eine Oberfläche des Kolbens, insbesondere an eine Oberfläche der Kolbenstange des Kolbens an, die im Wesentlichen parallel zu der Bewegungsrichtung des Kolbens und der Richtung der durch die Feder erzeugte Federkraft ist.

Das Verriegeln des Linearantriebs erfolgt vorzugsweise derart, dass in einem ersten Schritt der Kolben betätigt wird, sodass die Betätigungskraft den Kolben in die erste Endposition bewegt. Daraufhin wird das zweite Verriegelungselement von seiner Freigabeposition in Richtung seiner Sperrposition bewegt, in der die zweite Sperrfläche in Richtung der von der Feder erzeugten Federkraft vor der ersten Sperrfläche angeordnet ist, jedoch nicht an dieser anliegt. Schließlich wird die auf den Kolben wirkende Betätigungskraft abgebaut, sodass die auf den Kolben wirkende, durch die Feder erzeugte Federkraft den Kolben in Richtung der Verriegelungsposition bewegt, sodass das erste Verriegelungselement mit dem zweiten Verriegelungselements verrastet.

Die zweite Oberfläche des keilförmigen Vorsprungs kann relativ zu der Bewegungsrichtung des Kolbens und/oder relativ zur Bewegungsrichtung des zweiten Verriegelungselements geneigt sein. Vorzugsweise ist die zweite Oberfläche relativ zu der Bewegungsrichtung des Kolbens im Wesentlichen um einen Winkel von 20° geneigt. Entsprechend kann die zweite Oberfläche relativ zu der Bewegungsrichtung des zweiten Verriegelungselements um einen Winkel von 70° geneigt sein. So kann eine beanspruchungsgerechte Ausgestaltung des keilförmigen Vorsprungs mit einer mechanisch stabilen Struktur sichergestellt werden. Insbesondere kann die mechanische Stabilität keilförmigen Vorsprüngen mit besonders flachen ersten Oberflächen sichergestellt werden.

In einer Weiterentwicklung kann das erste Verriegelungselement im Bereich einer Ausnehmung in dem Kolben, insbesondere in der Kolbenstange des Kolbens, ausgebildet sein, wobei eine Randkontur der Ausnehmung die erste Sperrfläche bildet. Die Ausnehmung ist derart ausgebildet, dass in der ersten Endposition des Kolbens das zweite Verriegelungselement in die Ausnehmung in Richtung von der Freigabeposition zu der Sperrposition einführbar und darin aufnehmbar ist. Die Ausnehmung ist vorzugsweise im Bereich der ersten Sperrfläche in Form einer Trapeznut ausgebildet. Auf diese Weise ist die Ausnehmung mit einer Hinterschneidung versehen, sodass die die erste Sperrfläche bildende Randkontur die Ausnehmung in einer radialen Richtung der Kolbenstange verjüngt.

Die Verriegelungseinheit hat das zweite Verriegelungselement, das zwischen der Freigabe- und Sperrposition bewegbar ist. Die Verriegelungseinheit ist hierzu vorzugsweise mittels einer auf das zweite Verriegelungselement in Richtung ihrer Freigabeposition wirkenden weiteren Betätigungskraft betätigbar, insbesondere linear betätigbar. Weiterhin kann die Verriegelungseinheit eine das zweite Verriegelungselement in Richtung ihrer Sperrposition belastende weitere Feder umfassen. Die von der weiteren Feder erzeugte Federkraft kann der weiteren Betätigungskraft entgegenwirken. Alternativ kann die Verriegelungseinheit eine elektromagnetische Löseeinheit umfassen, die das zweite Verriegelungselement in Richtung ihrer Sperrposition mit einer Lösekraft beaufschlagt. Das erste Verriegelungselement der Kolbeneinheit kann derart ausgebildet sein, dass deren Sperrfläche in Richtung der von der weiteren Feder der Verriegelungseinheit erzeugte Federkraft oder der von der elektromagnetischen Löseeinheit erzeugte Lösekraft zeigt. Mit anderen Worten, die erste Sperrfläche kann eine Flächennormale mit einer Richtungskomponente aufweisen, die in Richtung der von der weiteren Feder der Verriegelungseinheit erzeugten weiteren Federkraft oder der von der elektromagnetischen Löseeinheit erzeugte Lösekraft zeigt und parallel zu dieser ist.

Genauer kann die Verriegelungseinheit pneumatische und/oder hydraulisch betätigbar sein. Die Verriegelungseinheit kann einen mit dem zweiten Verriegelungselement verbundenen weiteren Kolben und einen in dem Gehäuse des Linearantriebs ausgebildeten weiteren Zylinder umfassen, in dem eine weitere Kolbenplatte des Kolbens aufgenommen ist. In dem weiteren Zylinder kann die weitere Kolbenplatte einen durch die weitere Kolbenplatte und zumindest einen Teil des Zylinders eingegrenzten weiteren Druckraum abdichten, wobei der weitere Druckraum zum Erzeugen der weiteren Betätigungskraft auf das zweite Verriegelungselement mittels eines über eine weitere Fluidleitung in den weiteren Druckraum zuführbaren Fluids mit Druck beaufschlagbar sein kann. Alternativ oder zusätzlich kann die Verriegelungseinheit elektromechanisch und/oder elektromagnetisch betätigbar sein.

In einer Weiterentwicklung hat das zweite Verriegelungselement einen weiteren keilförmigen Vorsprung, der insbesondere an einer weiteren Kolbenstange des weiteren Kolbens ausgebildet sein kann. Der weitere keilförmige Vorsprung kann eine die zweite Sperrfläche bildende erste Oberfläche und eine dazu geneigte und daran angrenzende zweite Oberfläche umfassen. Weiterhin kann die zweite Oberfläche relativ zu der Bewegungsrichtung des Kolbens und relativ zu der Bewegungsrichtung des zweiten Verriegelungselements geneigt sein. Entsprechend dem keilförmigen Vorsprung des ersten Verriegelungselements kann die zweite Oberfläche des weiteren keilförmigen Vorsprungs des zweiten Verriegelungselements um einen Winkel von 20° relativ zu der Bewegungsrichtung des Kolbens geneigt sein.

Um einen sicheren Betrieb des Linearantriebs sicherzustellen, kann dieser ferner Mittel zum Detektieren einer korrekten Verriegelung umfassen. Hierzu kann die Kolbeneinheit eine erste Sensoreinheit zum Detektieren einer Position des Kolbens, insbesondere ob der Kolben in seiner Sperrposition angeordnet ist, umfassen. Genauer kann die erste Sensoreinheit einen berührungslos arbeitenden, vorzugsweise in dem Gehäuse des Linearantriebs angeordneten ersten Sensor zum Detektieren einer Position einer in dem Kolben, vorzugsweise in der Kolbenplatte, angeordneten ersten Markierung umfassen. Alternativ oder zusätzlich kann die Verriegelungseinheit eine zweite Sensoreinheit zum Detektieren einer Position des zweiten Verriegelungselements, insbesondere ob das zweite Verrieglungselement in seiner Sperrposition angeordnet ist, umfassen. Genauer kann die zweite Sensoreinheit einen berührungslos arbeitenden, vorzugsweise in dem Gehäuse des Linearantriebs angeordneten zweiten Sensor zum Detektieren einer Position einer in der Verriegelungseinheit, insbesondere in dem weiteren Kolben, bevorzugt in der weiteren Kolbenplatte, angeordneten zweiten Markierung umfassen. Beispielsweise kann der erste und/oder der zweite Sensor eine Hall-Sonde und die erste und/oder zweite Markierung eine Markierung in Form eines Permanentmagneten sein.

Ein Ventil, insbesondere ein Ventil für kryogene Medien, wie zum Beispiel ein Raketentreibstoffventil, umfasst einen federunterstützten, verriegelbaren Linearantrieb mit den vorhergehend beschriebenen Merkmalen.

Bevorzugte Ausführungsbeispiele der Erfindung werden im Folgenden anhand der beigefügten Zeichnungen näher erläutert, wobei
- Figur 1: schematisch eine Längsschnittansicht eines federunterstützten, verriegelbaren Linearantriebs gemäß einer ersten Ausführungsform in einem ersten Zustand,
- Figur 2: schematisch eine Längsschnittansicht des in Figur 1 gezeigten Linearantriebs in einem zweiten Zustand,
- Figur 3: schematisch eine vergrößerte Teillängsschnittansicht des in Figuren 1 und 2 gezeigten Linearantriebes,
- Figur 4: schematisch eine Längsschnittansicht des in Figuren 1 bis 3 gezeigten Linearantriebs in einem dritten Zustand,
- Figur 5: schematisch eine vergrößerte Teillängsschnittansicht des Linearantriebes gemäß einer zweiten Ausführungsform, und
- Figur 6: eine Teillängsschnittansicht des Linearantriebes gemäß einer dritten Ausführungsform in einer konkreten konstruktiven Ausgestaltung zeigen.

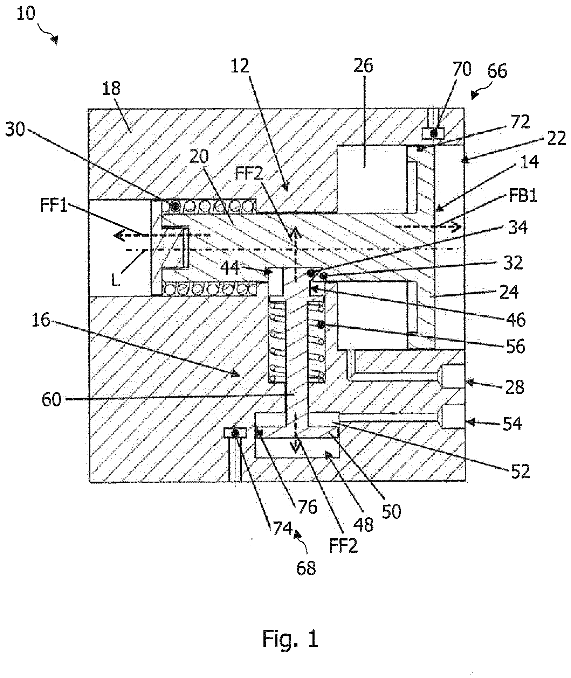

Figuren 1 bis 4 zeigen einen federunterstützten und verriegelbaren Linearantrieb 10 gemäß einer ersten Ausführungsform. Der Linearantrieb 10 umfasst eine Kolbeneinheit 12 mit einem linear betätigbaren Kolben 14 und eine den Kolben 14 in einer Verriegelungsposition sperrenden Verriegelungseinheit 16. Die Kolbeneinheit 12 und die Verriegelungseinheit 16 sind in einem Gehäuse 18 des Linearantriebs 10 aufgenommen. Der Linearantrieb 10 ist in einem hier nicht gezeigten Ventil enthalten, insbesondere in einem Ventil für kryogene Medien, wie beispielsweise ein Raketentreibstoffventil.

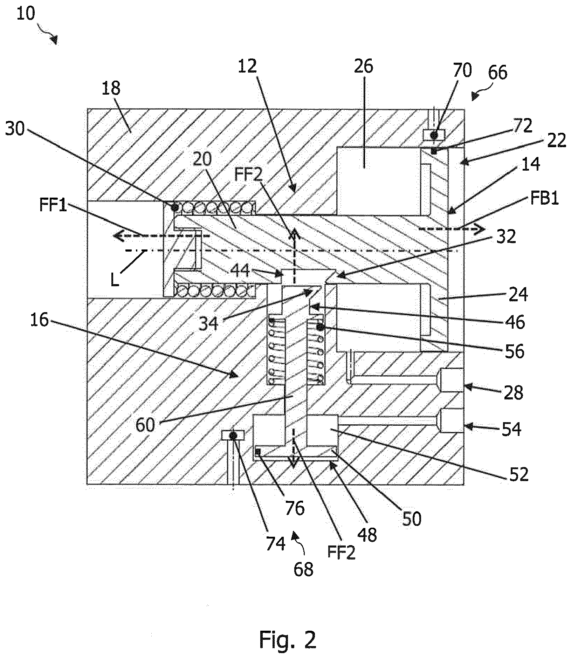

Der linear betätigbare Kolben 14 ist in dem Gehäuse 18 translatorisch entlang seiner Längsachse L bewegbar gelagert. Hierzu umfasst die Kolbeneinheit 12 eine hier nicht gezeigte, in dem Gehäuse 18 eingesetzte Gleitbuchse, in der eine Kolbenstange 20 des Kolbens 14 aufgenommen ist. Die Lagerung des Kolbens 14 ermöglicht, dass dieser entlang seiner Längsachse L zwischen zwei Endpositionen bewegbar ist. Eine durch die Kolbeneinheit 12 auf den Kolben 14 aufgebrachte Betätigungskraft FB1 bewirkt, dass der Kolben 14 in Richtung einer ersten Endposition verschiebbar ist. Die erste Endposition beschreibt einen Zustand, in dem der Kolben 14 bis zum Anschlag in den in den Figuren 1 bis 4 gezeigten Darstellungen nach rechts verschoben ist. Dieser Zustand des Kolbens 14 ist in Figur 2 gezeigt.

Zum Aufbringen der Betätigungskraft FB1 auf den Kolben 14, ist dieser in der hier gezeigten Ausführungsform pneumatisch und/oder hydraulisch betätigbar. Hierzu umfasst die Kolbeneinheit 12 einen in dem Gehäuse 18 des Linearantriebs 10 ausgebildeten Zylinder 22, in dem eine Kolbenplatte 24 des Kolbens 14 aufgenommen ist. Die Kolbenplatte 24 dient zum Abdichten eines Druckraums 26, der durch die Kolbenplatte 24 und zumindest einen Teil des Zylinders 22 eingegrenzt ist. Die Kolbenplatte 24 ist mit der Kolbenstange 20 des Kolbens 14 verbunden, wobei die Kolbenstange 20 insbesondere in der ersten Endposition des Kolbens 14 in den Druckraum 26 ragt. Zum Erzeugen der Betätigungskraft FB1 auf den Kolben 14, insbesondere auf die Kolbenplatte 24, ist der Druckraum 26 mittels eines über eine Fluidleitung 28 in den Druckraum 26 zuführbaren Fluids mit Druck beaufschlagbar. Mit anderen Worten, indem ein Fluid über die Fluidleitung 28 in den Druckraum 26 zugeführt wird, erhöht sich der Druck in dem Druckraum 26. Auf diese Weise wirkt eine Druckkraft auf eine dem Druckraum 26 zugewandte Oberfläche der Kolbenplatte 24, die die Betätigungskraft FB1 auf den Kolben 14 bildet. Entsprechend bewirkt ein Absinken des Drucks in dem Druckraum 26, dass die an dem Kolben angreifende Druckkraft bzw. Betätigungskraft FB1 betragsmäßig abnimmt. Entsprechend kann die Druckkraft auf die Oberfläche der Kolbenplatte 24 bzw. die Betätigungskraft FB1 auf den Kolben 14 betragsmäßig reduziert werden, indem der Druck in der Druckkammer 26 verringert wird. Dies kann entweder dadurch erfolgen, dass Fluid über die Fluidleitung 28 aus dem Druckraum 26 abgeführt wird oder der Kolben 14 in Richtung seiner ersten Endposition bewegt wird, was zur Vergrößerung des Volumens des Druckraums 26 führt.

Die Kolbeneinheit 12 umfasst ferner eine entgegen der Betätigungskraft FB1 auf den Kolben 14 wirkende, den Kolben 14 in Richtung einer zweiten Endposition belastende Feder 30. Die Feder 30 erzeugt eine Federkraft FF1 die entgegen der Betätigungskraft FB1 auf den Kolben 14 wirkt. Die zweite Endposition beschreibt dabei einen Zustand des Kolbens 14, in dem dieser bis zum Anschlag in den in den Figuren 1 bis 4 gezeigten Darstellung nach links verschoben ist.

Die Betätigung des Kolbens 14 erfolgt derart, dass durch das Aufbringen der Betätigungskraft FB1 der Kolben 14 in Richtung der ersten Endposition verschoben wird. In dem Fall, dass die auf den Kolben aufgebrachte Betätigungskraft FB1 abnimmt, sodass die Betätigungskraft FB1 betragsmäßig kleiner als die von der Feder 30 erzeugte Federkraft FF1 ist, wird der Kolben 14 in Richtung der zweiten Position, d.h. in entgegengesetzter Richtung, verschoben.

In Figur 1 ist ein Zustand des Kolbens 14 gezeigt, in dem dieser eine Verriegelungsposition eingenommen hat und mittels der Verriegelungseinheit 16 verriegelt ist. Die Verriegelung des Kolbens 14 bewirkt, dass eine Bewegung des Kolbens 14 in Richtung der zweiten Endposition gesperrt ist. Um den Kolben 14 in seiner Verriegelungsposition zu sperren, umfasst der Kolben 14 ein erstes Verriegelungselement 32 und die Verriegelungseinheit 16 ein zu dem ersten Verriegelungselement 32 komplementäres zweites Verriegelungselement 34. Das zweite Verriegelungselement 34 der Verriegelungseinheit 16 ist zwischen einer Freigabe- und einer Sperrposition entlang einer Richtung quer zu der Bewegungsrichtung des Kolbens 14 bewegbar. Figur 1 zeigt einen Zustand der Verriegelungseinheit 16, in dem das zweite Verriegelungselement 34 in seiner Sperrposition angeordnet ist. Demgegenüber ist in Figur 2 das zweite Verriegelungselement 34 in seiner Freigabeposition gezeigt.

Das erste und das zweite Verriegelungselement 32, 34 sind in der Verriegelungsposition des Kolbens 14 derart miteinander verrastbar, das mittels Formschluss eine Bewegung des zweiten Verriegelungselements 34 in Richtung seiner Freigabeposition gesperrt ist, wie in Figur 1 gezeigt. Durch diese formschlüssige Verbindung des ersten und des zweiten Verriegelungselements 32, 34 wird verhindert, dass im Betrieb des Linearantriebs 10 das zweite Verriegelungselement 34 sich unbeabsichtigter Weise aus der Verrastposition mit dem ersten Verriegelungselement 32 löst.

Die Kolbeneinheit 12 ist derart ausgebildet, dass in der Verriegelungsposition des Kolbens 14 das erste Verriegelungselement 32 durch die von der Feder 30 erzeugten Federkraft FF1 in Richtung der Verrastposition mit dem zweiten Verriegelungselement 34 beaufschlagt ist. Mit anderen Worten, in dem in Figur 1 gezeigten Zustand des ersten und des zweiten Verriegelungselements 32, 34 wirkt die Federkraft FF1 auf das erste Verriegelungselement 32 entgegen einer Richtung, in die das erste Verriegelungselement 32 zum Lösen der Verbindung mit dem zweiten Verriegelungselement 34 bewegbar ist.

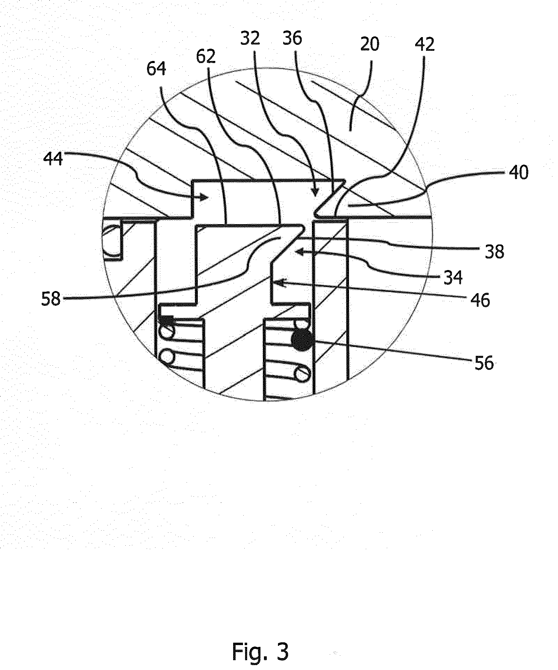

Figur 3 zeigt eine vergrößerte Ansicht auf das erste und das zweite Verriegelungselement 32, 34 in dem in Figur 2 gezeigten Zustand des Linearantriebs 10. Das erste Verriegelungselement 32 umfasst eine erste Sperrfläche 36, die zum Sperren der Bewegung des zweiten Verriegelungselements 34 in Richtung seiner Freigabeposition mit einer dazu komplementären zweiten Sperrfläche 38 des zweiten Verriegelungselements 34 in Eingriff bringbar ist, sodass diese aneinander anliegen, wie in Figur 1 gezeigt.

Die erste Sperrfläche 36 und die zweite Sperrfläche 38 sind relativ zu der Bewegungsrichtung des Kolbens 14 und relativ zu der Bewegungsrichtung des zweiten Verriegelungselements 34 geneigt. Genauer sind die erste Sperrfläche 36 und die zweite Sperrfläche 38 um einen Winkel von im Wesentlichen 45° relativ zu der Bewegungsrichtung des Kolbens 14 geneigt. Wie in Figuren 1 bis 4 gezeigt, zeigt die erste Sperrfläche 36 in Richtung der von der Feder 30 erzeugten Federkraft FF1. Mit anderen Worten, die erste Sperrfläche 36 hat eine Flächennormale mit einer Richtungskomponente, die in Richtung der von der Feder 30 erzeugten Federkraft FF1 zeigt und zu dieser parallel ist. Weiterhin ist die erste Sperrfläche 36 der Längsachse L des Kolbens 14 zugewandt. Entsprechend zeigt die zweite Sperrfläche 38 des zweiten Verriegelungselements 34 in eine Richtung entgegen der von der Feder 30 erzeugten Federkraft FF1. Die zweite Sperrfläche 38 ist somit von der Längsachse L des Kolbens 14 abgewandt.

Diese Ausgestaltung der ersten und der zweiten Sperrfläche 36, 38 bewirkt, dass, in dem in Figur 1 gezeigten Zustand, die von der Feder 30 erzeugte, auf das erste Verriegelungselement 32 wirkende Federkraft FF1 über die erste Sperrfläche 36 auf die zweite Sperrfläche 38 übertragen wird. Auf diese Weise wird das zweite Verriegelungselement 34 in Richtung seiner Sperrposition beaufschlagt bzw. gedrückt. Genauer bewirkt die Ausgestaltung des ersten und des zweiten Verriegelungselements 32, 34, dass die zwischen der ersten und der zweiten Sperrfläche 36, 38 übertragene Federkraft FF1 in eine erste und in eine dazu rechtwinklige zweite Teilkraft zerlegt wird. Die erste Teilkraft zeigt in Richtung der Federkraft FF1, d.h. in eine Richtung parallel zur Längsachse L des Kolbens 14. Entsprechend beaufschlagt die erste Teilkraft das erste Verriegelungselement 32 in Richtung der Verrastposition mit dem zweiten Verriegelungselement 34. Die zweite Teilkraft zeigt in die Bewegungsrichtung des zweiten Verriegelungselements 34 von der Freigabeposition zu der Sperrposition. Entsprechend beaufschlagt bzw. drückt die zweite Teilkraft das zweite Verriegelungselement 34 in Richtung seiner Sperrposition.

Das erste Verriegelungselement 32 hat einen keilförmigen Vorsprung 40, der an der Kolbenstange 20 des Kolbens 14 ausgebildet ist. Der keilförmige Vorsprung 40 hat einen die erste Sperrfläche 36 bildende erste Oberfläche und eine dazu geneigte daran angrenzende zweite Oberfläche 42. Die erste und die zweite Oberfläche 42 bilden in Richtung einer Spitze des keilförmigen Vorsprungs 40 sich verjüngende Flanken. Die zweite Oberfläche 42 des keilförmigen Vorsprungs 40 grenzt an eine Oberfläche der Kolbenstange 20 an und ist bündig zu dieser. In der in Figuren 1 bis 4 gezeigten Ausführungsform des Linearantriebs 10 ist die zweite Oberfläche 42 parallel zu der Oberfläche der Kolbenstange 20 und zu der Bewegungsrichtung des Kolbens 14 angeordnet. Genauer ist der keilförmige Vorsprung 40 im Bereich einer Ausnehmung 44 in der Kolbenstange 20 des Kolbens 14 ausgebildet. Dabei bildet eine Randkontur der Ausnehmung 44 die erste Sperrfläche 36. Vorliegend ist die Ausnehmung 44 im Bereich der ersten Sperrfläche 36 in Form einer Trapeznut ausgebildet. Entsprechend ist die Ausnehmung 44 mit einer Hinterschneidung versehen, sodass die die erste Sperrfläche 36 bildende Randkontur die Ausnehmung 44 in einer radialen Richtung der Kolbenstange 20 verjüngt. Die Ausnehmung 44 ist derart ausgebildet, dass in der ersten Endposition des Kolbens 14 das zweite Verriegelungselement 34 in die Ausnehmung 44 in Richtung von der Freigabeposition zu der Sperrposition einführbar und darin aufnehmbar ist.

Im Folgenden wird unter Bezugnahme auf Figuren 1 und 2 eine Betätigung der Verriegelung des Linearantriebs 10 beschrieben. In einem ersten Schritt wird der Kolben 14 derart betätigt, dass die Betätigungskraft FB1 den Kolben 14 in die erste Endposition bewegt, wie in Figur 2 gezeigt. Darauffolgend wird das zweite Verriegelungselement 34 von seiner Freigabeposition in Richtung seiner Sperrposition bewegt, in der die zweite Sperrfläche 38 in Richtung der von der Feder 30 erzeugten Federkraft FF1 vor der ersten Sperrfläche 36 angeordnet ist, jedoch nicht an dieser anliegt. Mit anderen Worten, in diesem Schritt wird das zweite Verriegelungselement 34 in die Ausnehmung 44 eingeführt. Schließlich wird die auf den Kolben 14 wirkende Betätigungskraft abgebaut, sodass die auf den Kolben 14 wirkende, durch die Feder 30 erzeugte Federkraft FF1 den Kolben 14 in Richtung der Verriegelungsposition bewegt, sodass das erste Verriegelungselement 32 mit dem zweiten Verriegelungselement 34 verrastet wird, wie in Figur1 gezeigt.

Das zweite Verriegelungselement 34 ist linear betätigbar, um dieses zwischen der Freigabeposition und der Sperrposition zu bewegen. Hierzu ist die Verriegelungseinheit 16 mittels einer auf das zweite Verriegelungselement 34 in Richtung der Freigabeposition wirkenden weiteren Betätigungskraft FB2 betätigbar. Genauer ist die Verriegelungseinheit 16 pneumatisch und/oder hydraulisch betätigbar. Hierzu kann die Verriegelungseinheit 16 einen mit dem zweiten Verriegelungselement 34 verbundenen weiteren Kolben 46 und einen in dem Gehäuse 18 des Linearantriebs 10 ausgebildeten weiteren Zylinder 48 umfassen, in dem eine weitere Kolbenplatte 50 des weiteren Kolbens 46 angeordnet ist. Die weitere Kolbenplatte 50 ist dafür vorgesehen, einen durch die weitere Kolbenplatte 50 und zumindest einen Teil des weiteren Zylinders 48 eingegrenzten weiteren Druckraum 52 abzudichten, wobei der weitere Druckraum 52 zum Erzeugen der weiteren Betätigungskraft FB2 auf das zweite Verriegelungselement 34 mittels eines über eine weitere Fluidleitung 54 in den weiteren Druckraum 52 zuführbaren Fluids mit Druck beaufschlagbar ist. Die Betätigung des weiteren Kolbens 46 der Verrieglungseinheit 16 erfolgt entsprechend der Betätigung des Kolbens 14 in der Kolbeneinheit 12.

Die Verriegelungseinheit 16 umfasst weiterhin eine das zweite Verriegelungselement 34 in Richtung der Sperrposition belastende weitere Feder 56, die eine weitere Federkraft FF2 erzeugt. Die weitere Federkraft FF2 wirkt der weiteren Betätigungskraft FB2 entgegen. Die weitere Betätigungskraft FB2 und die weitere Federkraft FF2 der Verriegelungseinheit 16 zeigen jeweils in eine Richtung quer zu der Betätigungskraft FB1 und Federkraft FF1 der Kolbeneinheit 12. Die erste Sperrfläche 36 des ersten Verriegelungselements 32 zeigt dabei in Richtung der von der weiteren Feder 56 erzeugten weiteren Federkraft FF2. Durch das Bereitstellen der weiteren Feder 56 ermöglicht der hier vorgeschlagene Linearantrieb 10, dass das zweite Verriegelungselement 34 mittels der weiteren Federkraft FF2 zusätzlich in Richtung seiner Sperrposition gedrückt wird.

Das zweite Verriegelungselement 34 umfasst einen weiteren keilförmigen Vorsprung 58. Der weitere keilförmige Vorsprung 58 ist an einem der weiteren Kolbenplatte 50 entgegengesetzten Ende einer weiteren Kolbenstange 60 des weiteren Kolbens 48 angeordnet. Der weitere keilförmige Vorsprung 58 hat eine die zweite Sperrfläche 38 bildende erste Oberfläche und eine dazu geneigte daran angrenzende zweite Oberfläche 62. Diese zweite Oberfläche 62 grenzt an eine Stirnfläche 64 des den weiteren keilförmigen Vorsprung 58 aufweisenden Endes der weiteren Kolbenstange 60 an. Die zweite Oberfläche 62 des weiteren keilförmigen Vorsprungs 58 ist parallel zu der zweiten Oberfläche 42 des keilförmigen Vorsprungs 40 des ersten Verriegelungselements 32 angeordnet. In einem Zustand, in dem das erste und das zweite Verriegelungselement 32, 34 verrastet sind, liegt die Stirnfläche 64 an einem Boden der Ausnehmung 44 an, sodass eine spielfreie Verbindung zwischen dem ersten und dem zweiten Verriegelungselement 32, 34 bereitgestellt wird, wie in Figur 1 gezeigt. In der in Figuren 1 bis 4 gezeigten Ausführungsform ist die zweite Oberfläche 62 des weiteren keilförmigen Vorsprungs 58 parallel zu der Stirnfläche 64 und bündig zu dieser angeordnet.

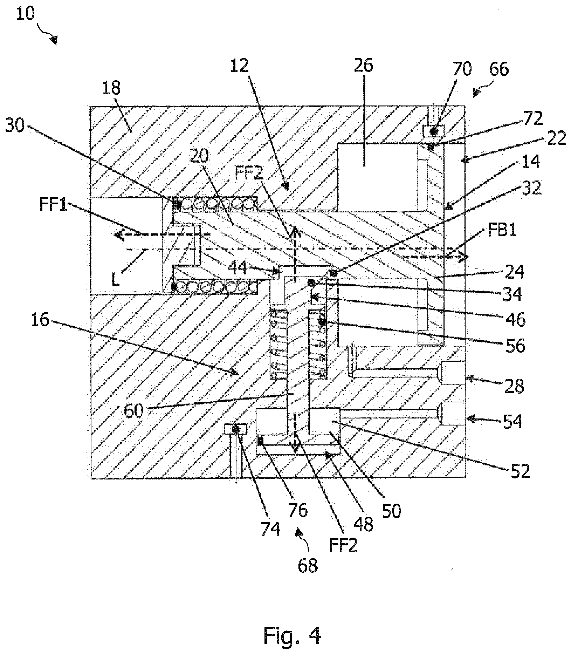

Die Ausgestaltung des ersten und des zweiten Verriegelungselements 32, 34 weist den vorteilhaften Effekt auf, dass ein nicht vollständiges bzw. fehlerhaftes Verrasten des ersten und des zweiten Verriegelungselements 32, 34 effektiv verhindert werden kann. In dem Fall, dass das zweite Verriegelungselement 34 aufgrund einer Fehlfunktion oder Störung nicht vollständig in seine Sperrfunktion bewegt werden kann, ermöglicht die geneigte Ausgestaltung der ersten und zweiten Sperrflächen 36, 38, dass das zweite Verriegelungselement 34 aufgrund der durch die Feder 30 der Kolbeneinheit 12 erzeugte Federkraft FF1 und die durch die weitere Feder 56 der Verriegelungseinheit 16 erzeugte weitere Federkraft FF2 in Richtung seiner Sperrfunktion bewegt wird. Mit anderen Worten, solange beim Bewegen des Kolbens 14 von seiner ersten Endposition in Richtung seiner Verrieglungsposition die erste und zweite Sperrfläche 36, 38 auch nur abschnittsweise, d.h. in einem geringen Bereich, miteinander in Eingriff gelangen, erfolgt ein Bewegen des ersten und des zweiten Verriegelungselements 32, 34 jeweils in die Verrastposition, in der diese vollständig miteinander in Eingriff gebracht und somit vollständig verrastet sind. Auf diese Weise werden fehlerinduzierte Zwischenpositionen vermieden, in denen das erste und das zweite Verriegelungselement 32, 34 nicht korrekt oder nicht vollständig miteinander verrastet sind. Im Speziellen lässt die Ausgestaltung des Linearantriebs 10 nur eine fehlerinduzierte Zwischenposition zu, wie in Figur 4 gezeigt. In dieser Zwischenposition treffen beim Bewegen des Kolbens 14 von seiner ersten Endposition in seine Verrieglungsposition die jeweiligen Spitzen des keilförmigen Vorsprungs 40 und des weiteren keilförmigen Vorsprungs 58 genau derart aufeinander, dass das zweite Verriegelungselement 34 weder in Richtung seiner Sperrposition noch in Richtung seiner Freigabeposition bewegt wird. Die Wahrscheinlichkeit des Eintretens einer fehlerinduzierten Zwischenposition ist somit deutlich geringer im Vergleich zu bekannten verriegelbaren Linearantrieben, sodass der hier vorgeschlagene Linearantrieb 10 zuverlässig betrieben werden kann.

Um einen zuverlässigen Betrieb sicherzustellen, umfasst der Linearantrieb 10 ferner Mittel 66, 68 zum Detektieren einer korrekten Verriegelung und einer fehlerinduzierten Zwischenposition. Hierzu umfasst die Kolbeneinheit 12 eine erste Sensoreinheit 66 zum Detektieren einer Position des Kolbens 14. Genauer ist die erste Sensoreinheit 66 dazu eingerichtet, zu ermitteln, ob der Kolben 14 im Bereich der ersten Endposition angeordnet ist. Die erste Sensoreinheit 66 umfasst einen berührungslos arbeitenden, in dem Gehäuse 18 des Linearantriebs 10 angeordneten ersten Sensor 70 zum Detektieren einer Position einer in der Kolbenplatte 24 angeordneten Markierung 72. Insbesondere ist der erste Sensor 70 dazu eingerichtet, einen Abstand zwischen dem ersten Sensor 70 und der ersten Markierung 72 zu ermitteln und darauf aufbauend eine Position des Kolbens 14 zu bestimmen. Der erste Sensor 70 ist dabei derart in dem Gehäuse 18 des Linearantriebs 10 angeordnet, dass, wenn der Kolben 14 in der ersten Endposition angeordnet ist, der Abstand zwischen dem ersten Sensor 70 und der ersten Markierung 72 am geringsten ist. Ferner umfasst die Verriegelungseinheit 16 eine zweite Sensoreinheit 68. Die zweite Sensoreinheit 68 ist dazu eingerichtet, zu ermitteln, ob das zweite Verriegelungselement 34 im Bereich der Sperrposition angeordnet ist. Die zweite Sensoreinheit 68 umfasst hierzu einen berührungslos arbeitenden, in dem Gehäuse 18 des Linearantriebs 10 angeordneten zweiten Sensor 74 zum Detektieren einer Position einer in der weiteren Kolbenplatte 50 angeordneten zweiten Markierung 76. Insbesondere ist der zweite Sensor 74 dazu eingerichtet, einen Abstand zwischen dem zweiten Sensor 74 und der zweiten Markierung 76 zu ermitteln und darauf aufbauend eine Position des zweiten Verriegelungselements 34 zu bestimmen. Der zweite Sensor 74 ist derart in dem Gehäuse 18 des Linearantriebs 10 angeordnet, dass, wenn das zweite Verriegelungselement 34 in der Sperrposition angeordnet ist, der Abstand zwischen dem zweiten Sensor 74 und der zweiten Markierung 76 am geringsten ist.

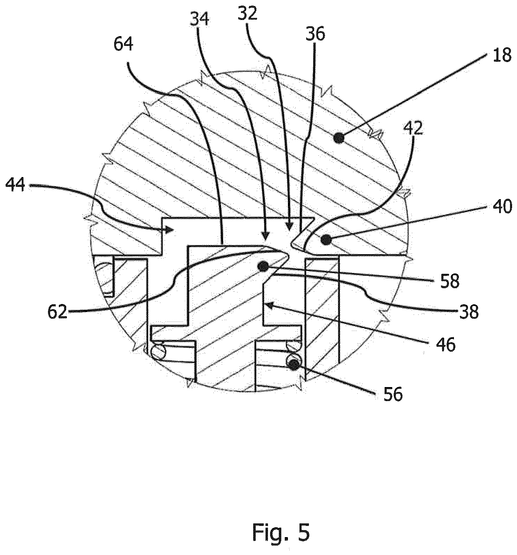

Figur 5 zeigt eine zweite Ausführungsform eines Linearantriebs 10, bei dem im Vergleich zu dem in Figuren 1 bis 4 gezeigten Linearantrieb 10 der keilförmigen Vorsprung 40 des ersten Verriegelungselements 32 und der weitere keilförmigen Vorsprung 52 des zweiten Verriegelungselements 34 eine andere strukturelle Ausgestaltung aufweisen. Genauer ist die zweite Oberfläche 42 des keilförmigen Vorsprungs 40 und die zweite Oberfläche 62 des weiteren keilförmigen Vorsprungs 58 relativ zu der Bewegungsrichtung des Kolbens 14 jeweils um einen Winkel von 20° geneigt. Auf diese Weise wird eine beanspruchungsgerechte Ausgestaltung des keilförmigen Vorsprungs 40 und des weiteren keilförmigen Vorsprungs 58 mit einer mechanisch stabilen Struktur bereitgestellt.

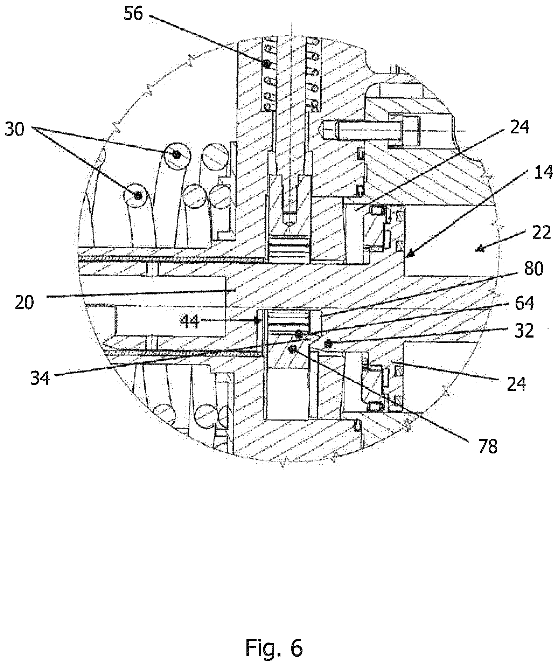

In Figur 6 ist eine dritte Ausführungsform eines Linearantriebs 10 in einer konkreten konstruktiven Ausgestaltung gezeigt. Gegenüber der in Figuren 1 bis 5 gezeigten Ausführungsformen umfasst die Verriegelungseinheit 16 einen die Kolbenstange 20 des Kolbens 14 umschließenden Ring 78, der in einem in Figur 5 gezeigten unteren Bereich an einer dem ersten Verriegelungselement zugewandten Oberfläche das zweite Verriegelungselement 34 ausbildet. Das erste Verriegelungselement 32 umfasst ferner eine erste Wirkfläche 80, die zwischen dem keilförmigen Vorsprung 40 und dem Boden der Ausnehmung 44 angeordnet ist. In der in Figur 5 gezeigten Darstellung ist die erste Wirkfläche 80 oberhalb des keilförmigen Vorsprungs 40 angeordnet. Die erste Wirkfläche 80 ist quer zu der Bewegungsrichtung des Kolbens 14 angeordnet und dazu eingerichtet mit dem zweiten Verriegelungselement, insbesondere mit der Spitze des weiteren kielförmigen Vorsprungs 58 in Eingriff zu gelangen. In einem Zustand, in dem das erste und das zweite Verriegelungselement miteinander verrastet sind, bewirkt die durch die weitere Feder 56 erzeugte Federkraft FF2, dass das zweite Verriegelungselement 34 in Richtung des Bodens der Ausnehmung 44 gedrückt wird. Mit anderen Worten, im Vergleich zu den in Figuren 1 bis 5 gezeigten Ausführungsformen, ist das zweite Verriegelungselement 34 tiefer in die Kolbenstange 20 einführbar was ein Lösen der Verbindung zwischen dem ersten und dem zweiten Verriegelungselement effektiver verhindern kann.

## Patentansprüche

1. Federunterstützter, verriegelbarer Linearantrieb (10) mit:
- einer Kolbeneinheit (12), die einen linear betätigbaren Kolben (14) mit einem ersten Verriegelungselement (32) und eine entgegen einer Betätigungskraft (FB1) auf den Kolben (14) wirkende, den Kolben (14) in Richtung einer Endposition belastende Feder (30) umfasst, und
- einer den Kolben (14) in einer Verriegelungsposition sperrenden Verriegelungseinheit (16) mit einem zu dem ersten Verriegelungselement (32) komplementären zweiten Verriegelungselement (34), das zwischen einer Freigabe- und einer Sperrposition in einer Richtung quer zu einer Bewegungsrichtung des Kolbens (14) bewegbar ist,
**dadurch gekennzeichnet, dass**
das erste und das zweite Verriegelungselement (32, 34) in der Verriegelungsposition des Kolbens (14) derart miteinander verrastbar sind, dass mittels Formschluss eine Bewegung des zweiten Verriegelungselements (34) in Richtung seiner Freigabeposition gesperrt ist.

2. Linearantrieb nach Anspruch 1, bei dem der Kolben (14) der Kolbeneinheit (12) pneumatisch und/oder hydraulisch betätigbar ist und einen in einem Gehäuse (18) des Linearantriebs (10) ausgebildeten Zylinder (22) umfasst, in dem eine Kolbenplatte (24) des Kolbens (14) aufgenommen ist, wobei die Kolbenplatte (14) einen durch die Kolbenplatte (14) und zumindest einen Teil des Zylinders (22) eingegrenzten Druckraum (26) abdichtet, und wobei der Druckraum (26) zum Erzeugen der Betätigungskraft (FB1) mittels eines über eine Fluidleitung (28) in den Druckraum (26) zuführbaren Fluids mit Druck beaufschlagbar ist.

3. Linearantrieb nach Anspruch 1 oder 2, bei dem in der Verriegelungsposition des Kolbens (14) das erste Verriegelungselement (32) durch eine von der Feder (30) erzeugte Federkraft (FF1) in Richtung einer Verrastposition mit dem zweiten Verriegelungselement (34) beaufschlagt ist.

4. Linearantrieb nach einem der Ansprüche 1 bis 3, bei dem das erste Verriegelungselement (32) eine erste Sperrfläche (36) umfasst, die zum Sperren der Bewegung des zweiten Verriegelungselements (34) in Richtung seiner Freigabeposition mit einer dazu komplementären zweiten Sperrfläche (38) des zweiten Verriegelungselements (34) in Eingriff bringbar ist, wobei die erste Sperrfläche (36) und die zweite Sperrfläche (38) relativ zu einer Bewegungsrichtung des zweiten Verriegelungselements (34) geneigt sind.

5. Linearantrieb nach Anspruch 4, bei dem die erste Sperrfläche (36) und die zweite Sperrfläche (38) relativ zu der Bewegungsrichtung des Kolbens (14) geneigt sind, wobei die erste Sperrfläche (36) des ersten Verrieglungselements (32) in Richtung der von der Feder (30) erzeugten Federkraft (FF1) zeigt.

6. Linearantrieb nach Anspruch 4 oder 5, bei dem die erste Sperrfläche (36) und die zweite Sperrfläche (38) relativ zu der Bewegungsrichtung des Kolbens (14) derart geneigt sind, dass die von der Feder (30) erzeugte, auf das erste Verriegelungselement (32) wirkende Federkraft (FF1) über die erste Sperrfläche (36) auf die zweite Sperrfläche (38) übertragbar ist, sodass das zweite Verriegelungselement (34) in Richtung seiner Sperrposition beaufschlagt wird.

7. Linearantrieb nach einem der Ansprüche 4 bis 6, bei dem das erste Verriegelungselement (32) einen keilförmigen Vorsprung (40), insbesondere an einer Kolbenstange (20) des Kolbens (14), umfasst, wobei der keilförmige Vorsprung (40) eine die erste Sperrfläche (36) bildende erste Oberfläche und eine dazu geneigte und daran angrenzende zweite Oberfläche (42) hat, und wobei insbesondere die zweite Oberfläche (42) relativ zu der Bewegungsrichtung des Kolbens (14) und relativ zu der Bewegungsrichtung des zweiten Verriegelungselements (34) geneigt ist.

8. Linearantrieb nach einem der Ansprüche 4 bis 7, bei dem das erste Verriegelungselement (32) im Bereich einer Ausnehmung (44) in dem Kolben (14), insbesondere in einer Kolbenstange (20) des Kolbens (14), ausgebildet ist, wobei die Randkontur der Ausnehmung (44) die erste Sperrfläche (36) bildet, und wobei insbesondere im Bereich der ersten Sperrfläche (36) die Ausnehmung (44) in Form einer Trapeznut ausgebildet ist.

9. Linearantrieb nach einem der Ansprüche 1 bis 8, bei dem die Verriegelungseinheit (16) mittels einer auf das zweite Verriegelungselement (34) in Richtung ihrer Freigabeposition wirkenden weiteren Betätigungskraft (FB2) betätigbar, insbesondere linear betätigbar ist und eine das zweite Verriegelungselement (34) in Richtung ihrer Sperrposition belastende weitere Feder (56) umfasst, wobei die Verriegelungseinheit (34) pneumatische und/oder hydraulisch und/oder elektromechanisch und/oder elektromagnetisch betätigbar ist.

10. Linearantrieb nach Anspruch 8, bei dem die erste Sperrfläche (36) des ersten Verrieglungselements (32) in Richtung einer von der weiteren Feder (56) der Verriegelungseinheit (16) erzeugten weiteren Federkraft (FF2) zeigt.

11. Linearantrieb nach Anspruch 9 oder 10, bei der die Verriegelungseinheit (16) pneumatisch und/oder hydraulisch betätigbar ist, wobei insbesondere die Verriegelungseinheit (16) einen mit dem zweiten Verriegelungselement (34) verbundenen weiteren Kolben (46) und ein in dem Gehäuse (18) des Linearantriebs (10) ausgebildeten weiteren Zylinder (48) umfasst, in dem eine weitere Kolbenplatte (50) des weiteren Kolbens (46) aufgenommen ist, wobei die weitere Kolbenplatte (50) einen durch die weiteren Kolbenplatte (50) und zumindest einen Teil des weiteren Zylinders (48) eingegrenzten weiteren Druckraum (52) abdichtet, und wobei der weitere Druckraum (52) zum Erzeugen der weiteren Betätigungskraft (FB2) auf das zweite Verriegelungselement (34) mittels eines über eine weitere Fluidleitung (54) in den weiteren Druckraum (52) zuführbaren Fluids mit Druck beaufschlagbar ist.

12. Linearantrieb nach einem der Ansprüche 4 bis 11, bei dem die zweite Sperrfläche (38) des zweiten Verriegelungselements (34) relativ zu der Bewegungsrichtung des zweiten Verriegelungselements (34) und/oder relativ zu der Bewegungsrichtung des Kolbens (14) geneigt ist, und/oder in der Verrastposition des ersten und des zweiten Verriegelungselements (32, 34) die zweite Sperrfläche (38) an der ersten Sperrfläche (36) anliegt.

13. Linearantrieb nach einem der Ansprüche 4 bis 12, bei dem das zweite Verriegelungselement (34) einen weiteren keilförmigen Vorsprungs (58) umfasst, wobei der weitere keilförmige Vorsprung (58) eine die zweite Sperrfläche (38) bildende erste Oberfläche und eine dazu geneigte und daran angrenzende zweite Oberfläche (62) umfasst, und wobei insbesondere die zweite Oberfläche (62) relativ zu der Bewegungsrichtung des Kolbens (14) und relativ zu der Bewegungsrichtung des zweiten Verriegelungselements (34) geneigt ist.

14. Linearantrieb nach einem der Ansprüche 1 bis 13, bei dem die Kolbeneinheit (12) eine erste Sensoreinheit (66) zum Detektieren einer Position des Kolbens (14), insbesondere ob der Kolben (14) in seiner Verriegelungsposition angeordnet ist, umfasst, und/oder
die Verriegelungseinheit (16) eine zweite Sensoreinheit (68) zum Detektieren einer Position des zweiten Verriegelungselements (34), insbesondere ob das zweite Verrieglungselement (34) in seiner Sperrposition angeordnet ist, umfasst.

15. Ventil, insbesondere Ventil für kryogene Medien, das einen federunterstützten, verriegelbaren Linearantrieb (10) nach einem der Ansprüche 1 bis 14 umfasst.

## Claims

1. A spring-supported lockable linear drive (10), with:
- a piston unit (12), which comprises a linearly actuatable piston (14) with a first locking element (32) and a spring (30) which acts against an actuating force (FB1) on the piston (14) and loads the piston (14) towards an end position, and
- a locking unit (16) blocking the piston (14) in a locking position and having a second locking element (34) which is complementary to the first locking element (32) and which is movable between a release and a blocking position in a direction transverse to a direction of movement of the piston (14),
**characterized in that**
the first and the second locking elements (32, 34) are latchable together in the locking position of the piston (14) in such a manner that a movement of the second locking element (34) towards its release position is blocked by means of positive locking.

2. The linear drive according to claim 1, in which the piston (14) of the piston unit (12) is pneumatically and/or hydraulically actuatable and comprises a cylinder (22) which is formed in a housing (18) of the linear drive (10) and in which a piston plate (24) of the piston (14) is accommodated, wherein the piston plate (14) seals a pressure chamber (26) delimited by the piston plate (14) and at least part of the cylinder (22), and wherein the pressure chamber (26) is pressurizable by means of a fluid which is supplyable into the pressure chamber (26) via a fluid line (28) in order to generate the actuating force (FB1).

3. The linear drive according to claim 1 or 2, in which in the locking position of the piston (14), the first locking element (32) is acted upon by a spring force (FF1) generated by the spring (30) in the direction of a latching position with the second locking element (34).

4. The linear drive according to one of claims 1 to 3, in which the first locking element (32) comprises a first blocking surface (36) which, for blocking the movement of the second locking element (34) towards its release position, is engageable with a second blocking surface (38) of the second locking element (34) which is complementary thereto, wherein the first blocking surface (36) and the second blocking surface (38) are inclined relative to a direction of movement of the second locking element (34).

5. The linear drive according to claim 4, in which the first locking surface (36) and the second locking surface (38) are inclined relative to the direction of movement of the piston (14), wherein the first locking surface (36) of the first locking member (32) faces in the direction of the spring force (FF1) generated by the spring (30).

6. The linear drive according to claim 4 or 5, in which the first blocking surface (36) and the second blocking surface (38) are inclined relative to the direction of movement of the piston (14) in such a manner that the spring force (FF1) generated by the spring (30) and acting on the first locking element (32) is transmittable via the first blocking surface (36) to the second blocking surface (38), so that the second locking element (34) is acted upon in the direction towards its blocking position.

7. The linear drive according to any one of claims 4 to 6, in which the first locking element (32) comprises a wedge-shaped projection (40), in particular on a piston rod (20) of the piston (14), wherein the wedge-shaped projection (40) has a first surface forming the first blocking surface (36) and a second surface (42) inclined thereto and adjacent thereto, and wherein in particular the second surface (42) is inclined relative to the direction of movement of the piston (14) and relative to the direction of movement of the second locking element (34).

8. The linear drive according to any one of claims 4 to 7, in which the first locking element (32) is formed in the region of a recess (44) in the piston (14), in particular in a piston rod (20) of the piston (14), wherein the edge contour of the recess (44) forms the first blocking surface (36), and wherein in particular in the region of the first blocking surface (36) the recess (44) is formed in the form of a trapezoidal groove.

9. The linear drive according to any one of claims 1 to 8, in which the locking unit (16) is actuatable, in particular linearly actuatable, by means of a further actuating force (FB2) acting on the second locking element (34) in the direction towards its release position and comprises a further spring (56) loading the second locking element (34) in the direction towards its blocking position, wherein the locking unit (34) is pneumatically and/or hydraulically and/or electromechanically and/or electromagnetically actuatable.

10. The linear drive according to claim 8, wherein the first blocking surface (36) of the first locking element (32) faces in the direction of a further spring force (FF2) generated by the further spring (56) of the locking unit (16).

11. The linear drive according to claim 9 or 10, in which the locking unit (16) is actuatable pneumatically and/or hydraulically, wherein in particular the locking unit (16) comprises a further piston (46) connected to the second locking element (34) and a further cylinder (48) which is formed in the housing (18) of the linear drive (10) and in which a further piston plate (50) of the further piston (46) is accommodated, wherein the further piston plate (50) seals a further pressure chamber (52) delimited by the further piston plate (50) and at least part of the further cylinder (48), and wherein the further pressure chamber (52) is pressurizable by means of a fluid which is supplyable into the further pressure chamber (52) via a further fluid line (54) in order to generate the further actuating force (FB2) on the second locking element (34).

12. The linear drive according to any one of claims 4 to 11, in which the second locking surface (38) of the second locking element (34) is inclined relative to the direction of movement of the second locking element (34) and/or relative to the direction of movement of the piston (14), and/or the second locking surface (38) rests against the first locking surface (36) in the latched position of the first and second locking elements (32, 34).

13. The linear drive according to any one of claims 4 to 12, in which the second locking element (34) comprises a further wedge-shaped projection (58), wherein the further wedge-shaped projection (58) comprises a first surface forming the second blocking surface (38) and a second surface (62) inclined thereto and adjoining thereto, and wherein in particular the second surface (62) is inclined relative to the direction of movement of the piston (14) and relative to the direction of movement of the second locking element (34).

14. The linear drive according to any one of claims 1 to 13, in which the piston unit (12) comprises a first sensor unit (66) for detecting a position of the piston (14), in particular whether the piston (14) is arranged in its locking position, and/or
the locking unit (16) comprises a second sensor unit (68) for detecting a position of the second locking element (34), in particular whether the second locking element (34) is arranged in its blocking position.

15. A valve, in particular a valve for cryogenic media, comprising a spring-supported lockable linear drive (10) according to any one of claims 1 to 14.

## Revendications

1. Entraînement linéaire verrouillable monté sur ressort (10), comprenant :
- une unité de piston (12) qui comprend un piston actionnable linéairement (14) comprenant un premier élément de verrouillage (32) et un ressort qui agit contre une force d'actionnement (FB1) sur le piston (14) et sollicite le piston (14) dans le sens d'une position finale (30), et
- une unité de verrouillage (16) bloquant le piston (14) dans une position de verrouillage comprenant un deuxième élément de verrouillage (34) complémentaire au premier élément de verrouillage (32) et qui peut se déplacer entre une position de déverrouillage et une position de verrouillage dans une direction transversale à une direction de déplacement du piston (14),
**caractérisé en ce que**
les premier et deuxième éléments de verrouillage (32, 34) peuvent être enclenchés ensemble dans la position de verrouillage du piston (14) de telle sorte qu'un déplacement du deuxième élément de verrouillage (34) est bloqué dans la direction de sa position de déverrouillage par complémentarité de formes.

2. Entraînement linéaire selon la revendication 1, dans lequel le piston (14) de l'unité de piston (12) peut être actionné pneumatiquement et/ou hydrauliquement et comprend un cylindre (22) formé dans un logement (18) de l'entraînement linéaire (10), dans lequel une plaque de piston (24) du piston (14) est reçu, la plaque de piston (14) scellant un espace de pression (26) délimité par la plaque de piston (14) et au moins une partie du cylindre (22), et l'espace de pression (26) pouvant être soumis à une pression au moyen d'un fluide qui peut être amené dans la chambre de pression (26) via une conduite de fluide (28), pour générer la force d'actionnement (FB1).

3. Entraînement linéaire selon les revendications 1 ou 2, dans lequel, dans la position de verrouillage du piston (14), le premier élément de verrouillage (32) est sollicité par une force de ressort (FF1) générée par le ressort (30) dans la direction d'une position d'enclenchement avec le deuxième élément de verrouillage (34).

4. Entraînement linéaire selon l'une quelconque des revendications 1 à 3, dans lequel le premier élément de verrouillage (32) comprend une première surface de verrouillage (36) qui peut être mise en prise avec une deuxième surface de verrouillage complémentaire à elle (38) du deuxième élément de verrouillage (34) pour bloquer le déplacement du deuxième élément de verrouillage (34) dans la direction de sa position de déverrouillage, la première surface de verrouillage (36) et la deuxième surface de verrouillage (38) étant inclinées par rapport à une direction de déplacement du deuxième élément de verrouillage (34).

5. Entraînement linéaire selon la revendication 4, dans lequel la première surface de verrouillage (36) et la deuxième surface de verrouillage (38) sont inclinées par rapport à la direction de déplacement du piston (14), la première surface de verrouillage (36) du premier élément de verrouillage (32) pointant en direction de la force de ressort (FF1) générée par le ressort (30).

6. Entraînement linéaire selon les revendications 4 ou 5, dans lequel la première surface de verrouillage (36) et la deuxième surface de verrouillage (38) sont inclinées par rapport à la direction de déplacement du piston (14) de sorte que la force de ressort (FF1) générée par le ressort (30) et agissant sur le premier élément de verrouillage (32) peut être transmise à la deuxième surface de verrouillage (38) via la première surface de verrouillage (36), de sorte que le deuxième élément de verrouillage (34) est sollicité dans la direction de sa position de verrouillage.

7. Entraînement linéaire selon l'une quelconque des revendications 4 à 6, dans lequel le premier élément de verrouillage (32) comprend une saillie cunéiforme (40), en particulier sur une tige de piston (20) du piston (14), la saillie cunéiforme (40) ayant une première surface formant la première surface de verrouillage (36) et une deuxième surface (42) inclinée par à elle et adjacente à elle, et en particulier la deuxième surface (42) étant inclinée par rapport à la direction de déplacement du piston (14) et par rapport à la direction de déplacement du deuxième élément de verrouillage (34).

8. Entraînement linéaire selon l'une quelconque des revendications 4 à 7, dans lequel le premier élément de verrouillage (32) est formé au niveau d'un évidement (44) dans le piston (14), en particulier dans une tige de piston (20) du piston (14), le contour de bord de l'évidement (44) formant la première surface de verrouillage (36), et en particulier l'évidement (44) étant réalisé sous la forme d'une rainure trapézoïdale au niveau de la première surface de verrouillage (36).

9. Entraînement linéaire selon l'une quelconque des revendications 1 à 8, dans lequel l'unité de verrouillage (16) peut être actionnée, en particulier actionnée linéairement, au moyen d'une autre force d'actionnement (FB2) agissant sur le deuxième élément de verrouillage (34) dans la direction de sa position de déverrouillage, et comprend un autre ressort (56) sollicitant le deuxième élément de verrouillage (34) dans la direction de sa position de verrouillage, l'unité de verrouillage (34) étant actionnée pneumatiquement et/ou hydrauliquement et/ou électromécaniquement et/ou électromagnétiquement.

10. Entraînement linéaire selon la revendication 8, dans lequel la première surface de verrouillage (36) du premier élément de verrouillage (32) pointe dans la direction d'une autre force de ressort (FF2) générée par l'autre ressort (56) de l'unité de verrouillage (16).

11. Entraînement linéaire selon les revendications 9 ou 10, dans lequel l'unité de verrouillage (16) peut être actionnée pneumatiquement et/ou hydrauliquement, en particulier l'unité de verrouillage (16) comprenant un autre piston (46) relié au deuxième élément de verrouillage (34) et un autre cylindre (48) formé dans le logement (18) de l'entraînement linéaire (10), cylindre dans lequel une autre plaque de piston (50) de l'autre piston (46) est logée, l'autre plaque de piston (50) scellant une autre chambre de pression (52) délimitée par l'autre plaque de piston (50) et au moins une partie de l'autre cylindre (48), et l'autre chambre de pression (52) étant soumise à une pression au moyen d'un fluide pouvant être amené dans l'autre chambre de pression (52) via une autre conduite de fluide (54), pour générer l'autre force d'actionnement (FB2) sur le deuxième élément de verrouillage (34).

12. Entraînement linéaire selon l'une quelconque des revendications 4 à 11, dans lequel la deuxième surface de verrouillage (38) du deuxième élément de verrouillage (34) est inclinée par rapport à la direction de déplacement du deuxième élément de verrouillage (34) et/ou par rapport à la direction de déplacement du piston (14), et/ou la deuxième surface de verrouillage (38) repose contre la première surface de verrouillage (36) dans la position d'enclenchement du premier et du deuxième éléments de verrouillage (32, 34).

13. Entraînement linéaire selon l'une quelconque des revendications 4 à 12, dans lequel le deuxième élément de verrouillage (34) comprend une autre saillie cunéiforme (58), l'autre saillie cunéiforme (58) comprenant une première surface formant la deuxième surface de verrouillage (38) et une deuxième surface (62) inclinée par rapport à elle et adjacente à elle, et en particulier la deuxième surface (62) étant inclinée par rapport à la direction de déplacement du piston (14) et par rapport à la direction de déplacement du deuxième élément de verrouillage (34).

14. Entraînement linéaire selon l'une quelconque des revendications 1 à 13, dans lequel l'unité de piston (12) comprend une première unité de capteur (66) servant à détecter une position du piston (14), en particulier si le piston (14) est disposé dans sa position de verrouillage, et/ou
l'unité de verrouillage (16) comprend une deuxième unité de capteur (68) servant à détecter une position du deuxième élément de verrouillage (34), en particulier si le deuxième élément de verrouillage (34) est disposé dans sa position verrouillée.

15. Soupape, en particulier soupape pour milieux cryogéniques, qui comprend un entraînement linéaire verrouillable monté sur ressort (10) selon l'une quelconque des revendications 1 à 14.
